# EUROPÄISCHE PATENTSCHRIFT

(11) **EP 0 672 493 B1**
(45) Veröffentlichungstag und Bekanntmachung des Hinweises auf die Patenterteilung: **30.08.2000**
(21) Anmeldenummer: 95103238.2
(22) Anmeldetag: 07.03.1995
(51) Int. Cl.: B23D 21/10, B26D 3/16

(54) **Rohrabstechgerät für Kunststoffrohre**
Device for cutting pipes
Dispositif pour couper des tubes

(30) Priorität: 17.03.1994 DE 4409160
(43) Veröffentlichungstag der Anmeldung: 20.09.1995
(73) Patentinhaber: ROTHENBERGER Werkzeuge Aktiengesellschaft, 60327 Frankfurt (DE)
(72) Erfinder: Herrgen, Rudolf, D-42929 Wermelskirchen (DE)
(74) Vertreter: Zapfe, Hans, Dipl.-Ing.

(56) Entgegenhaltungen:
- WO-A-81/00225
- DE-C- 275 926
- FR-A- 1 160 870
- US-A- 3 999 292

## Beschreibung

Die Erfindung betrifft ein Rohrabstechgerät für Kunststoffrohre nach dem Oberbegriff des Patentanspruchs 1.

Bei einem durch die DE 31 36 406 C2 bekannten Rohrabstechgerät besitzt die Gewindespindel zwei entgegengesetzt zueinander verlaufende Gewindegänge, und zwar mit einem Rechtsgewinde M16 x 2 und mit einem Linksgewinde M10 x 1,5, das sich axial an das größere Gewinde anschließt. Durch die additive Wirkung der beiden Gewinde wird der Werkzeughalter bei einer Umdrehung des Handgriffs um einen Weg von 3,5 mm verschoben. Dieser große Verschiebeweg wurde deswegen gewählt, weil das bekannte Werkzeug für das Abstechen von Kunststoffrohren mit Außendurchmessern zwischen 30 und 110 mm vorgesehen war. Für die Verwendung des Rohrabstechgeräts für Rohrdurchmesser unterhalb von 110 mm sind sogenannte Einsatzbacken aus Kunststoff vorgesehen, die in die Spannvorrichtung eingesetzt werden. Der Verstellweg beträgt also notwendigerweise 40 mm zuzüglich der Werkzeugbewegung beim Einstechen und Anfasen.

Das bekannte Rohrabstechgerät hat sich bei sogenannten "weichen" Kunststoffen bewährt. In letzter Zeit kommen jedoch in zunehmendem Maße Kunststoffrohre auf den Markt, die sich durch eine größere Temperaturbeständigkeit von den früher üblichen Kunststoffrohren unterscheiden. Diese Kunststoffrohre werden unter anderem zum Einsatz in Rauchgasabzüge, d.h. Schornsteine oder Kamine, verwendet und zeichnen sich durch die Verwendung von Füllstoffen mineralischen Charakters aus. Bei der Verwendung des bekannten Rohrabstechgeräts für derartige Kunststoffe haben sich nunmehr Schwierigkeiten ergeben, die bis zum Abbrechen der Abstechschneide und zur Ausbildung sogenannter "Rattermarken" beim Anfasen geführt haben. Die Ursache hierfür liegt zum Teil in den Benutzergewohnheiten: Die Bedienungsperson dreht den Handgriff üblicherweise um Drehwinkel zwischen 60 und 120 °, was bei der bekannten Doppelspindel zu einem Vorschub zwischen 0,6 und 1,2 mm führt. Dieser Vorschub führt bei harten Rohrwerkstoffen zu den bereits beschriebenen negativen Wirkungen. Bei einem Verstellweg von 3,5 mm pro Umdrehung werden 12 bis 13 volle Umdrehungen des Handgriffs benötigt, um die besagte Durchmesserdifferenz von 40 mm zu überbrücken. Bei einem Feingewinde mit einer Steigung von 1 mm würden mehr als 40 Umdrehungen benötigt, um den gleichen Verstellweg zurückzulegen. Dadurch gestaltet sich der Einsatz des bekannten Rohrabstechgeräts schwierig und zeitaufwendig.

Durch die DE 21 59 744 A1 ist es bekannt, bei einem Rohrabstechgerät zwischen einer Radialführung bzw. einem Werkzeugblock und einer Gewindespindel eine geschlossene Spindelmutter anzuordnen, die als Grobeinstellglied bezeichnet wird und mittels eines Längsschlitzes verschiebbar auf dem Werkzeugblock angeordnet ist. Diese Anordnung ermöglicht zwar auch eine Schnellverstellung, aber nur in jeweils einer Richtung. In der jeweils entgegengesetzten Richtung muß die Gewindespindel aus der Gewindemutter herausgeschraubt werden. Dies führt zu dem Nachteil, daß nach jeder Grobeinstellung und nach jedem Abstechvorgang die Gewindespindel um den Hub beim Abstechvorgang zurück geschraubt werden muß, weil sonst die Gewindespindel schrittweise, d.h. Abstechvorgang um Abstechvorgang, allmählich ihrem Ende bzw. Endanschlag zugeführt wird, so daß ggf. ein Abstechvorgang auch nicht mehr zu Ende geführt werden kann.

Durch die WO-A-81/00225 ist ein gattungsgemäßes Rohrabstechgerät bekannt, bei dem in Umfangsrichtung mit Abstand voneinander eine Schneidrolle zum Abstehen und eine Schneidplatte zum Anfasen vorgesehen sind, wobei die Schneidplatte wahlweise in eine Schneidposition und in eine zurückgezogene Stellung schwenkbar ist. Schneidrollen sind jedoch für harte Rohrwerkstoffe, wie sie heute im Heizungsbau verwendet werden, nicht geeignet, da sie nach dem Verdrängungsprinzip und nicht nach dem Zerspanungsprinzip des Werkstoffs arbeiten. Wie in der Schrift selbst ausgeführt ist (Brückenabsatz der Seiten 8 und 9), erfordert das bekannte Werkzeug ein elastisches Ausweichen der Rohrwandung, dem die Spannvorrichtung jedoch entgegenwirkt. über die Ausbildung der Gewindespindel und ihres Widerlagers ist nur gesagt, daß es sich um einen Ratschenmechanismus handelt. Eine Gewindesteigung ist nicht angegeben. Die Gewindeverbindung zwischen der Gewindespindel und dem Werkzeughalter ist starr, so daß das Anfaswerkzeug einer unrunden Kontur des Rohres nicht folgen kann. Dies führt bei unrunden Rohren zu einer welligen Ausbildung der Anfasung und zu einem schwankenden Kraftbedarf beim Schneiden und beim Anfasen. Auch wird das Schneidwerkzeug nicht gegenüber der Rohroberfläche abgestützt. Dies führt zwar bei der vorgeschlagenen Verwendung einer Schneidrolle nicht zu Problemen, wohl aber beim Ersatz der Scheidrolle durch einen Abstechstahl mit einer Abstechschneide. Dabei tritt nämlich in der Endphase des Trennvorgangs der Effekt ein, daß die Abstechschneide den Restquerschnitt des Rohres schlagartig durchdringt und nicht oder nur noch mit stark erhöhtem Kraftbedarf bewegbar ist. Vor allem aber sind Größe und Gleichmäßigkeit der Anfasung dem Zufall und der Sorgfalt der Bedienungsperson überlassen. Die Verwendung eines Abstechstahls anstelle einer Schneidrolle ist aber bei harten Kunststoffen unerläßlich, insbesondere bei temperaturbeständigen Kunststoffen, die eine Füllung aus Mineralstoffen aufweisen.

Durch die DE-C-275 926 ist ein Vorschubregler für ortsfeste Schlittenkaltsägen bekannt, bei dem eine als Halbmutter ausgebildete Spindelmutter in Vorschubrichtung kraftabhängig von der Gewindelspindel abhebbar ist, so daß der Vorschub der Gewindespindel unterbrochen wird. Der überlastmechanismus arbeitet lageabhängig durch ein Gegengewicht nach dem Schwerkraftprinzip, ist also für Handwerkzeuge, die in beliebigen Raumlagen um eine Rohrachse herum bewegt werden müssen, nicht brauchbar. Vor allem aber arbeitet die bekannte Lösung in umgekehrter Richtung: Würde die Spindel anstatt über ein Zahnrad über einen Handgriff angetrieben, so wäre die zur Spindelachse senkrecht stehende Gewindeflanke vom Hangriff weg gerichtet, so daß der Spindelvorschub bei größerem Kraftbedarf unterbrochen würde. Für eine kräftefreie Schnellverstellung, wie sie beim abwechselnden Bearbeiten von Rohren stark unterschiedlicher Durchmesser erforderlich ist, ist die bekannte Lösung weder vorgesehen noch geeignet.

Durch die US-A-3 999 292 ist ein transportables Abstechgerät bekannt, mit dem die Enden bereits einzementierter Kunststoffrohre von innen her mittels eines Abstechstahls abgetrennt werden können. Zur Begrenzung des Vorschubs und der Betätigungskraft stützt sich der Abstechstahl mittels eines hierzu parallelen Anschlags auf der inneren Rohroberfläche ab. Der Vorschub des Abstechstahls erfolgt durch Druckfedern, die vor dem Einsetzen der Werkzeugs von Hand vorgespannt werden. Eine Gewindespindel für einen Vorschub des Werkzeugs und/oder die Verstärkung der Vorschubkraft ist nicht vorgesehen und wäre auch sinnlos, da eine solche Spindel in Innern des Rohres nicht zu betätigen wäre.

Der Erfindung liegt daher die Aufgabe zugrunde, ein Rohrabstechgerät der eingangs beschriebenen Gattung dahingehend zu verbessern, daß mit diesem auch Kunststoffrohre aus temperaturbeständigen bzw. harten Werkstoffen abgestochen werden können, ohne daß hierbei die Gefahr eines Abbrechens der Abstechschneide und der Ausbildung von ungleichmäßigen Anfasungen und von Rattermarken an der Fase besteht, und daß die Gewindespindel auch ohne ihre Drehbewegung gegenüber einem Gegengewinde in beiden Richtungen schnell verstellbar ist. Die Lösung der Aufgabe soll also nicht auf Kosten des Bedienungskomforts des Rohrabstechgeräts erfolgen.

Die Lösung der gestellten Aufgabe erfolgt erfindungsgemäß durch die Merkmale im Kennzeichen des Patentanspruchs 1.

Die bauliche Vereinigung von Abstech- und Anfas-Schneide führt zu einem einfachen und robusten Aufbau des Handwerkzeugs.

Das erfindungsgemäß verwendete Feingewinde hat bei einem Außendurchmesser des Gewindes von 16 mm eine Steigung von weniger als 2 mm, beispielsweise zwischen 1,5 und 1,0 mm. Bei einer "Handumdrehung" um Drehwinkel zwischen 60 und 120 ° erfolgt bei einer Gewindesteigung von 1,0 mm nur noch ein Werkzeugvorschub von 0,16 bis 0,33 mm. Ein solcher Vorschub führt nicht mehr zu einem Abbrechen der Abstechschneide und auch nicht mehr zur Ausbildung von Rattermarken auf der Fase, die auf Schwingungen durch die Elastizität des Antriebssystems zurückzuführen sind.

Die Ausbildung des Widerlagers als Mutternsektor führt zu geringen Betätigungskräften und zu einem geringen Verschleiß.

Durch die Verwendung eines Feingewindes, dessen dem Handgriff zugekehrte Flanke unter einem Winkel von etwa 90 ° zur Spindelachse verläuft, kann der zur Gewindespindel komplementäre Mutternsektor nicht aus dem Eingriff in die Gewindespindel herausgedrückt werden kann. Andererseits kann durch einen manuellen Eingriff der Mutternsektor vorübergehend außer Eingriff mit der Gewindespindel gebracht werden, und hierbei kann alsdann ein Schnellrückzug der Gewindespindel mit dem Werkzeug durchgeführt werden. In umgekehrter Richtung läßt sich die Gewindespindel gleichfalls schnell gegenüber dem Mutternsektor verschieben, der aufgrund des asymmetrischen Gewindequerschnitts wie eine Ratsche wirkt.

Es ist dabei besonders vorteilhaft, wenn das Feingewinde ein Sägengewinde ist.

Zum Zwecke einer leichten Bedienung ist es besonders vorteilhaft, wenn der Mutternsektor Teil einer auf einer Schwenkachse gelagerten Wippe ist, deren einer Arm den Muttersektor trägt und deren anderer Arm ein gegen einen Kraftspeicher betätigbarer Auslösehebel ist.

Es ist dabei im Zuge einer weiteren Ausgestaltung besonders vorteilhaft, wenn die Abstechschneide und/oder die Anfasschneide einen negativen Schneidwinkel aufweist. Auch diese Maßnahmen tragen zum sicheren Ablauf des Abstech- und des Anfasvorgangs bei.

Weitere vorteilhafte Ausgestaltungen des Erfindungsgegenstandes ergeben sich aus den übrigen Unteransprüchen.

Ein Ausführungsbeispiel des Erfindungsgegenstandes wird nachfolgend anhand der Figuren 1 bis 5 näher erläutert.

Es zeigen:
- Figur 1: einen Axialschnitt durch das vollständige Rohrabstechgerät,
- Figur 2: eine Draufsicht auf den Gegenstand von Figur 1 in Richtung des Pfeils II in Figur 1 unter Weglassung von die Sicht versperrenden Teilen,
- Figur 3: einen Teilausschnitt aus Figur 1 in vergrößertem Maßstab,
- Figur 4: eine Seitenansicht des Schneidwerkezeugs in Richtung des Pfeils IV in Figur 5, und
- Figur 5: eine Draufsicht auf das Schneidwerkzeug nach Figur 4 in Richtung des Pfeils V.

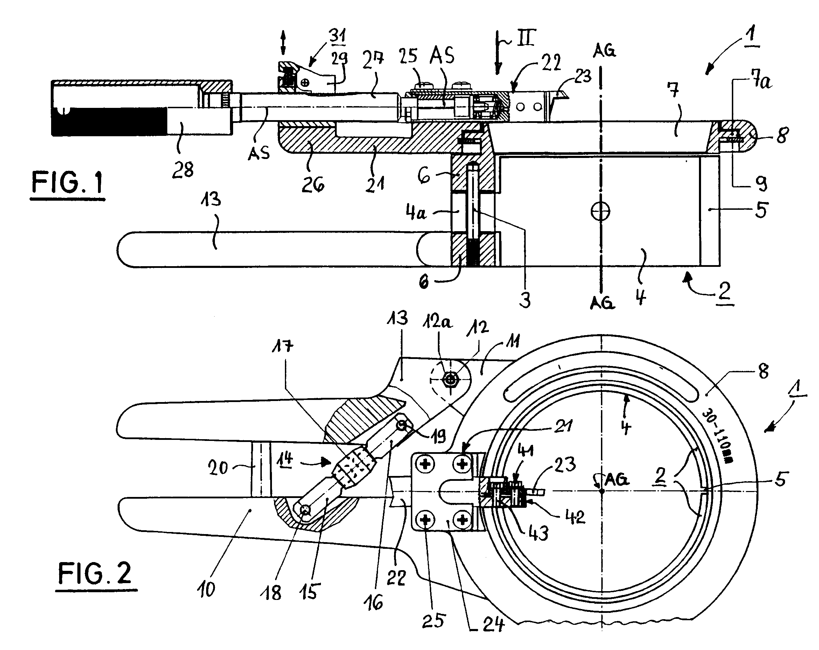

In den Figuren 1 und 2 ist ein Rohrabstechgerät 1 dargestellt, das mittels einer Spannvorrichtung 2 auf einem hier nicht gezeigten Rohr festlegbar ist. Die Spannvorrichtung 2 besteht aus zwei halbzylindrischen Schalen, die durch einen Gelenkzapfen 3 schwenkbar zueinander geführt sind. In Figur 1 ist nur die hintere Halbschale 4 mit dem Gelenkauge 4a vollständig dargestellt, während von der vorderen Halbschale nur die beiden Gelenkaugen 6 sichtbar sind, in denen der Gelenkzapfen 3 festgesetzt ist. Die vordere Halbschale ist einstückig mit einem Führungsring 7 verbunden, der einen nach außen radial abstehenden Führungsflansch 7a besitzt. Auf dem Führungsring 7 ist drehbar ein Lagerring 8 aufgesetzt, der auf dem Führungsflansch 7a mittels eines Segerrings 9 gehalten ist. Der Lagerring 8 ist gegenüber dem Führungsring 7 frei drehbar.

An der vorderen Halbschale ist einstückig ein Handhebel 10 angebracht, während die hintere Halbschale 4 nur ein angeformtes Gelenkauge 11 besitzt. Über einen Gelenkzapfen 12, der durch eine Mutter 12a gesichert ist, ist an dem Gelenkauge 11 ein zweiter Handhebel 13 gelagert, der mit dem ersten Handhebel 10 über einen Kniehebel 14 verbunden ist, der aus zwei Laschen 15 und 16 mit zwei gegenläufigen Gewindefortsätzen besteht, die in eine Rändelmutter 17 eingreifen. Die Laschen 15 und 16 sind über Gelenkzapfen 18 und 19 mit dem jeweiligen Handhebel 10 bzw. 13 verbunden. Die Rändelmutter 17 dient zur Verstellung des Abstandes zwischen den Gelenkzapfen 18 und 19 und damit zur Einstellung der Klemmkraft zwischen den beiden Halbschalen und dem Rohr. Zur Festlegung des Kniehebels 14 in der "durchgedrückten" Stellung dient ein Abstandshalter 20 zwischen den Handhebeln 10 und 13.

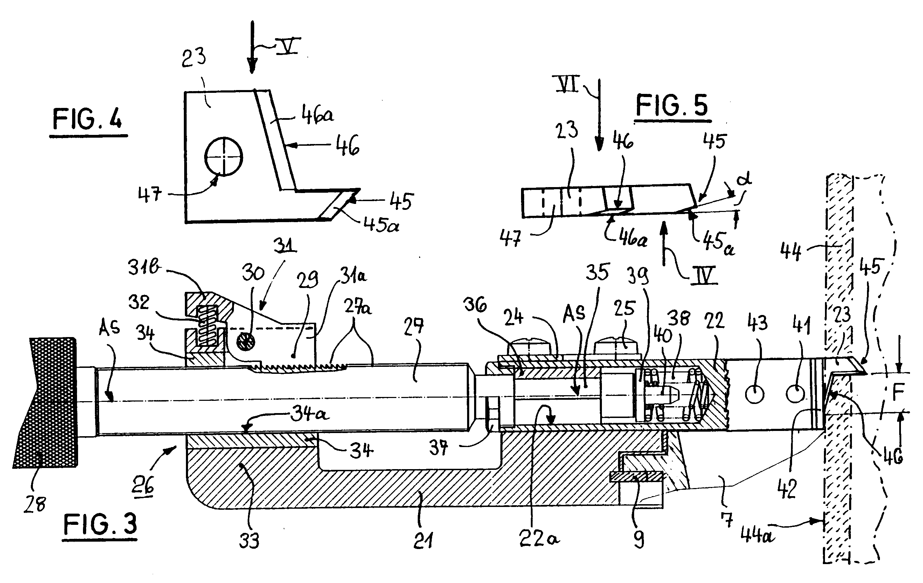

An dem Lagerring 8 ist - radial abstehend - eine Radialführung 21 angeformt, die einen Werkzeughalter 22 mit einem Schneidwerkzeug 23 trägt, das nachstehend anhand der Figuren 4 und 5 noch näher erläutert wird. Die Radialführung 21 für den Werkzeughalter 22 wird durch eine Führungsplatte 24 vervollständigt, die durch Schrauben 25 gehalten ist. Am äußersten Ende der Radialführung 21 befindet sich eine Spindelführung 26 für eine eingängige Gewindespindel 27, die an ihrem dem Werkzeughalter 22 abgekehrten Ende mit einem Handgriff 28 versehen ist. Die Spindelachse ist mit AS-AS bezeichnet.

Es ist den Figuren 1 und 2 zu entnehmen, daß die Radialführung 21 mit dem Werkzeughalter 22 und der Gewindespindel 27 mittels des Handgriffs 28 um die Geräteachse AG-AG herumführbar ist und daß das Schneidwerkzeug 23 mittels der Gewindespindel 27 in Richtung auf die Geräteachse AG-AG nachstellbar ist, wobei die Geräteachse AG-AG mit der Rohrachse zumindest im wesentlichen identisch ist.

Figur 3 zeigt die Verhältnisse deutlicher: Die Gewindespindel 27 weist ein eingängiges Feingewinde 27a auf, das als Sägengewinde ausgeführt ist, d.h. die dem Handgriff zugekehrte Flanke des Gewindes verläuft unter einem Winkel von 90 ° zur Spindelachse AS-AS. Als Widerlager für die Gewindespindel 27 ist ein zu dieser komplementärer Mutternsektor 29 vorhanden, der zum Zwecke einer Schnellverschiebung der Gewindespindel 27 vorübergehend außer Eingriff mit dieser bringbar ist. Der Mutternsektor 29 ist Teil einer auf einer Schwenkachse 30 gelagerten Wippe 31, deren einer Arm 31a den Mutternsektor 29 trägt, und deren anderer Arm 31b ein gegen einen Kraftspeicher 32 betätigbarer Auslösehebel ist. Der Kraftspeicher 32 ist als vorgespannte Druckfeder ausgeführt. Aufgrund dieser konstruktiven Anordnung wirken das Feingewinde 27a und der Mutternsektor 29 als Ratsche, d.h. bei unbelastetem Auslösehebel läßt sich die Gewindespindel 27 zwar in Richtung der Geräteachse AG-AG verschieben, nicht aber umgekehrt. Soll die Gewindespindel aus der in Figur 3 dargestellten Stellung nach links bewegt werden, so muß der Auslösehebel bzw. der Wippenarm 31b gedrückt werden, wodurch der Mutternsektor 29 für die Dauer der Hebelbetätigung außer Eingriff mit der Gewindespindel 27 gebracht wird. Nach dem Loslassen der Wippe 31 kehrt der Mutternsektor 29 wieder in die Eingriffsstellung mit der Gewindespindel 27 zurück.

Der äußerste Teil der Radialführung 21 ist als Lagerbock 33 ausgeführt, in dem eine gehärtete Stahlbüchse 34 mit einer Zylinderbohrung 34a untergebracht ist, so daß die Gewindespindel 27 keinen Verschleiß im Lagerbock 33 verursacht. Der Lagerbock 33 besitzt auf seiner Oberseite einen von parallelen Wänden begrenzten Spalt, in dem die Wippe 31 derart untergebracht ist, daß nur der Arm 31b als Auslösehebel aus dem Spalt herausragt. Die Schwenkachse 30 für die Wippe 31 verläuft parallel zu einer Tangente an die Zylinderbohrung 34a.

Die Gewindespindel 27 greift mittels eines verjüngten Fortsatzes 35 in eine Hülse 36 ein, die um ein begrenztes Maß Iängsverschieblich in dem Werkzeughalter 22 gelagert ist. Die hierfür im Werkzeughalter 22 vorgesehene Längsbohrung 22a ist durch eine Ringmutter 37 verschlossen, die nur den Durchtritt des Fortsatzes 35 ermöglicht, nicht aber den Austritt der Hülse 36. Aus der gezeigten Stellung ist der Fortsatz 35 zusammen mit der Hülse 36 relativ zum Werkzeughalter 22 um ein begrenztes Maß nach rechts verschiebbar, wobei ein Kraftspeicher 38, der aus zwei ineinanderliegenden Druckfedern besteht, zunehmend komprimiert wird, solange der Werkzeughalter 22 gegen den Widerstand des abzustechenden Rohres verschoben wird. Der Kraftspeicher 38 besteht aus zwei ineinanderliegenden Druckfedern, die an ihrem einen Ende durch ein Druckstück 39 mit einer Nabe 40 geführt sind.

Die Bohrung 22a ist als Sackbohrung ausgeführt. Am jenseitigen Ende ist das Schneidwerkzerng 23 durch eine Schraube 41 auswechselbar befestigt. Zwischen dem Schneidwerkzeug 23 und dem an dieser Stelle stufenförmig abgesetzten Werkzeughalter 22 befindet sich noch ein Gleitschuh 42, der als L-förmig abgewinkeltes Blech ausgeführt ist und in einer hier nicht gezeigten schlitzförmigen Ausnehmung des Werkzeughalters 22 durch eine weitere Schraube 43 eingeklemmt gehalten ist.

Der Gleitschuh 42 ist eine sehr vorteilhafte Weiterbildung des Erfindungsgegenstandes. Er gleitet unter der Wirkung des Kraftspeichers 38 auf der Oberfläche 44a des Rohres 44, sobald das Schneidwerkzeug 23 eine Eindringtiefe erreicht hat, wie sie in Figur 3 dargestellt ist. Die schließlich fertiggestellte Fase erstreckt sich über das Längenmaß F. Bei der Benutzung führt das Rohrabstechgerät um die Geräteachse AG-AG die bereits beschriebene Drehbewegung aus, bei der der in Figur 3 gezeigte Geräteteil in Richtung hinter die Zeichenebene gedreht wird.

Das Schneidwerkzeug 23 ist in den Figuren 4 und 5 näher dargestellt: Figur 4 zeigt das Schneidwerkzeug von der gegenüberliegenden Seite. Es besitzt eine Abstechschneide 45 und eine Anfasschneide 46, die beide durch je einen schrägen Anschliff 45a und 46a einen negativen Schneidwinkel aufweisen, der die Wirkung des Schneidwerkzeugs 23 gegenüber spröden bzw. harten Rohrwerkstoffen zusätzlich verbessert. Eine Bohrung 47 dient zum Hindurchführen der Schraube 41 (Figur 3). Die Darstellung in den Figuren 4 und 5 ist maßstäblich. Der Schneidwinkel "α" liegt dabei zwischen 1 und 10 °, vorzugsweise bei etwa 2 bis 5 °. Die dem Betrachter in Figur 4 zugewandte Fläche ist diejenige Fläche, die gegen den Rohrwerkstoff vorgeschoben wird. Die Vorschubrichtung ist in Figur 5 durch den Pfeil VI dargestellt.

## Patentansprüche

1. Rohrabstechgerät (1) für Kunststoffrohre (44) mit einem Schneidwerkzeug (23) zum Abstechen und mit einer Anfas- Schneide (46), mit einem auf das Rohr aufsetzbaren und mittels einer Spannvorrichtung (2) am Rohr (44) festlegbaren Führungsring (7) mit einem drehbar auf diesen aufgesetzten Lagerring (8), der in einer Radialführung (21) einen um die Rohr- und Geräteachse (AG-AG) herumführbaren Werkzeughalter (22) mit einer Gewindespindel (27) mit Handgriff (28) für die zur Geräteachse (AG-AG) im wesentlichen radiale Verstellung des Schneidwerkzeugs (23) aufweist, wobei zwischen der Radialführung (21) und der Gewindespindel (27) zum Zwecke einer Schnellverschiebung der Gewindespindel (27) in beiden Richtungen ein gegen Federkraft aus dem Eingriff in die Geweindespindel (27) herausschwenkbares Widerlager angeordnet ist, das als Mutternsektor (29) ausgebildet ist, **dadurch gekennzeichnet**, daß in Kombination
a) das Schneidwerkzeug (23) eine Abstech- (45) und eine Anfas-Schneide (46) aufweist,
b) die Gewindespindel (27 ) ein eingängiges Feingewinde (27a) aufweist, dessen eine Flanke
b1) unter einem Winkel von etwa 90° zur Spindelachse (AS-AS) verläuft und
b2) dem Handgriff (28) zugekehrt ist,
c) zwischen der Gewindespindel (27) und dem Werkzeughalter (22) ein Kraftspeicher (38) angeordnet ist, und daß
d) am Werkzeughalter (22) ein Gleitschuh (42) für die Abstützung des Werkzeughalters (22) in der Endphase des Anfasvorgangs auf der äußeren Rohroberfläche (44a) angeordnet ist.

2. Rohrabstechgerät nach Anspruch 1, **dadurch gekennzeichnet**, daß das Feingewinde (27a) ein Sägengewinde ist.

3. Rohrabstechgerät nach Anspruch 1, **dadurch gekennzeichnet**, daß das Feingewinde (27a) eine Steigung von weniger als 2 mm, vorzugsweise eine Steigung zwischen 1,0 und 1,6 mm, aufweist.

4. Rohrabstechgerät nach Anspruch 1, **dadurch gekennzeichnet**, daß das Feingewinde (27a) und der Mutternsektor (29) als einseitig wirkende Ratsche zusammenwirken.

5. Rohrabstechgerät nach Anspruch 1, **dadurch gekenzeichnet**, daß der Kraftspeicher (38) aus zwei ineinandliegenden, vorgespannten Druckfedern besteht.

6. Rohrabstechgerät nach Anspruch 1, **dadurch gekennzeichnet**, daß die Abstechschneide (45) einen negativen Schneidwinkel aufweist.

7. Rohrabstechgerät nach Anspruch 1, **dadurch gekennzeichnet**, daß die Anfasschneide (46) einen negativen Schneidwinkel aufweist.

## Claims

1. Pipe tapping tool (1) for plastic pipes (44), comprising a cutting tool (23) for tapping and a pilot cutter (46), with a guide ring (7), which is placed onto the pipe and fixed on the pipe (44) by means of a clamping device (2), with a thereonto rotary mounted mounting ring (8) which comprises in a radial guide (21) a tool holder (22), which is guided around the pipe axis and the tool axis (AG-AG), with a threaded spindle (27) with a handle (28) for essentially radial adjustment of the cuffing tool (23) relative to the tool axis (AG-AG), and between the radial guide (21) and the threaded spindle (27) is arranged for the purpose of rapid displacement of the threaded spindle (27) in both directions an abutment which can be pivoted against a springload out of an engagement in the threaded spindle (27), which is designed as a nut sector (29), **characterised in that** in a combination
a) the cutting tool (23) comprises a tapping cutter (45) and a pilot cutter (46);
b) the threaded spindle (27) comprises a singlephase fine thread (27a) the one flank of which
b1) extends at an angle of approximately 90° to the spindle axis (AS-AS); and
b2) is facing towards the handle (28);
c) between the threaded spindle (27) and the tool holder (22) is configured a load retainer (38); and
d) on the tool holder (22) is configured a gliding shoe (42) to support the tool holder (22) in the end phase of the pilot process on the outer pipe surface (44a).

2. Pipe tapping tool according to Claim 1, **characterised in that** the fine thread (27a) is a saw thread.

3. Pipe tapping tool according to Claim 1, **characterised in that** the fine thread (27a) has a pitch of less than 2 mm, preferably a pitch between 1.0 and 1.6 mm.

4. Pipe tapping tool according to Claim 1, **characterised in that** the fine thread (27a) and the nut sector (29) co-operate as singlesidedly operational detent mechanism.

5. Pipe tapping tool according to Claim 1, **characterised in that** the load retainer (38) is composed of two pressure springs which lie within each other and are pretensioned.

6. Pipe tapping tool according to Claim 1, **characterised in that** the tapping cutter (45) has a negative cutting angle.

7. Pipe tapping tool according to Claim 1, **characterised in that** the pilot cutter (46) has a negative cutting angle.

## Revendications

1. Appareil (1) à tronçonner des tubes en matière plastique (44), comportant un outil de coupe (23) pour le tronçonnage et un tranchant de biseautage (46), une bague de guidage (7) susceptible d'être posée sur le tube et d'être fixée sur le tube (44) au moyen d'un dispositif de serrage (2), et comprenant un anneau de montage (8) qui est posé en rotation sur ladite bague et qui comprend dans un guidage radial (21) un porte-outil (22) pouvant être entraîné autour de l'axe du tube et de l'appareil (AG-AG) avec une broche filetée (27) présentant une manette (28) pour le déplacement de l'outil de coupe (23) sensiblement radialement par rapport à l'axe de l'appareil (AG-AG), dans lequel est prévu entre le guidage radial (21) et la broche filetée (27) une contrebutée susceptible d'être basculée hors de l'engagement avec la broche filetée (27) dans les deux directions à l'encontre d'une force élastique dans le but d'un déplacement rapide de la broche filetée (27), ladite contrebutée étant réalisée sous forme de secteur d'écrou (29), caractérisé en ce que :
a) l'outil de coupe (23) comprend un tranchant de coupe (45) et un tranchant de biseautage (46) ;
b) la broche filetée (27) comprend un pas de vis fin à un seul filet (27a), dont un flanc :
b1) s'étend sous un angle d'environ 90° par rapport à l'axe de broche (AS-AS), et
b2) est orienté vers la manette (28) ;
c) un accumulateur de force (38) est agencé entre la broche filetée (27) et le porte-outil (22) ; et en ce que
d) un sabot coulissant (42) est agencé sur le porte-outil (22) pour l'appui du porte-outil (22) pendant la phase finale de l'opération de biseautage sur la surface extérieure (44a) du tube.

2. Appareil à tronçonner des tubes selon la revendication 1, caractérisé en ce que le pas de vis fin (27a) est un pas de vis à profil en dents de scie.

3. Appareil à tronçonner des tubes selon la revendication 1, caractérisé en ce que le pas de vis fin (27a) présente un pas de moins de 2 mm, de préférence un pas entre 1,0 et 1,6 mm.

4. Appareil à tronçonner des tubes selon la revendication 1, caractérisé en ce que le pas de vis fin (27a) et le secteur d'écrou (29) coopèrent comme un cliquet à effet unidirectionnel.

5. Appareil à tronçonner des tubes selon la revendication 1, caractérisé en ce que l'accumulateur de force (38) est constitué par deux ressorts de compression situés l'un dans l'autre et mis sous précontrainte.

6. Appareil à tronçonner des tubes selon la revendication 1, caractérisé en ce que le tranchant de coupe (45) présente un angle de coupe négatif.

7. Appareil à tronçonner des tubes selon la revendication 1, caractérisé en ce que le tranchant de biseautage (46) présente un angle de coupe négatif.
